**Europäisches Patentamt**

**European Patent Office**

**Office européen des brevets**

(19)

(11) Numéro de publication : **0 333 538 B1**

(12)

# FASCICULE DE BREVET EUROPEEN

(45) Date de publication du fascicule du brevet :
**06.05.92 Bulletin 92/19**

(51) Int. Cl.⁵ : **B29C 35/08, B29C 35/12, B29C 67/18, B29C 45/14**

(21) Numéro de dépôt : **89400533.9**

(22) Date de dépôt : **24.02.89**

(54) **Procédé et dispositif de réalisation d'un joint solidaire de la partie périphérique d'un vitrage et vitrage obtenu.**

(30) Priorité : **29.02.88 FR 8802492**

(43) Date de publication de la demande :
**20.09.89 Bulletin 89/38**

(45) Mention de la délivrance du brevet :
**06.05.92 Bulletin 92/19**

(84) Etats contractants désignés :
**DE GB IT**

(56) Documents cités :
**EP-A- 0 127 546
EP-A- 0 220 908
EP-A- 0 233 846
EP-A- 0 252 207
DE-A- 3 435 365
DE-A- 3 526 171
DE-A- 3 535 460
FR-A- 2 251 421
US-A- 4 499 036
US-A- 4 543 283**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Lanfranchini, Jean-Jacques**
**75, rue Saint Hubert**
**F-91390 Morsang-Sur-Orge (FR)**
Inventeur : **Olivier, Jean-Jacques**
**170, rue de Paris**
**F-92100 Boulogne (FR)**
Inventeur : **Jaffiol, Franck**
**30, rue Salvador Allende**
**F-92000 Nanterre (FR)**

(74) Mandataire : **Polus, Camille et al**
**c/o Cabinet Lavoix 2, Place d'Estienne d'Orves**
**F-75441 Paris Cedex 09 (FR)**

## Description

L'invention concerne un procédé et un dispositif de réalisation d'un joint solidaire de la partie périphérique d'un vitrage et le vitrage obtenu.

En particulier, mais de manière non exclusive, le procédé et le dispositif concernent la réalisation d'un joint à la partie périphérique d'un vitrage de véhicule automobile.

Les vitrages pour véhicule automobile comportent le plus souvent un joint en caoutchouc ou matière plastique disposé sur le pourtour du vitrage et assurant une fonction d'étanchéité.

Dans l'industrie automobile, on utilise différentes techniques pour équiper le vitrage de son joint.

Une première technique consiste à réaliser un profilé de caoutchouc extrudé et vulcanisé comportant une gorge pour permettre son assemblage avec le vitrage, puis à chausser le pourtour du vitrage avec le profilé. Cette opération se fait manuellement.

De plus, comme il est très difficile d'obtenir des vitrages ayant des cotes précises et que le joint comporte des cotes fixes, il est très souvent nécessaire de compenser des écarts de cotes entre le vitrage et le joint, par application de couches plus ou moins importantes de colle, pendant l'opération de chaussage et de collage du joint. L'étanchéité du joint n'est donc pas obtenue de manière parfaitement reproductible.

En outre, sur le plan esthétique, les extrémités du joint sont visibles ce qui nuit à l'aspect de la pièce et la teinte du joint de caoutchouc est noire, dans la grande majorité des cas.

Enfin, il est nécessaire de prévoir un stockage des joints extrudés avant leur utilisation pour le chaussage de vitrages.

On utilise également des procédés de surmoulage d'un joint de caoutchouc ou de matière plastique sur la partie périphérique du vitrage. Ces procédés ont l'avantage de réaliser le joint in situ sur le vitrage, si bien que ce joint est parfaitement adapté à la dimension du vitrage et parfaitement étanche.

On connaît par exemple un procédé de surmoulage du vitrage par un mélange à base d'éthylène-propylène-diène monomère (EPDM) dans lequel le mélange est injecté sous forme fluide dans un moule disposé autour de la partie périphérique du vitrage puis vulcanisé. Cependant, ce procédé nécessite l'utilisation d'un moule métallique utilisé à une température élevée de l'ordre de 180°C. Les pressions d'injection sont relativement élevées, de l'ordre de 200 bars dans l'empreinte du moule ; de telles pressions sont nécessaires, dans la mesure où les produits injectés sont pâteux et non pas liquides, même à haute température.

En conséquence, les vitrages qui peuvent être réalisés par ce procédé sont de petite ou de moyenne taille ; les grandes pièces du type pare-brise ne peuvent en effet supporter la pression du matériau pendant l'injection et éclatent au cours du moulage. Enfin, le procédé ne se prête pas à la fabrication en carrousel, pour des questions de coût d'investissement. En effet, les moules sont chers et un carrousel comporte plusieurs moules ce qui accroît d'autant son prix de revient.

On connaît également un procédé de surmoulage d'un vitrage par un matériau thermoplastique tel que le chlorure de polyvinyle (PVC) plastifié, en utilisant un procédé classique d'injection de matières thermoplastiques.

Dans ce procédé également, et pour les mêmes raisons, les pressions d'injection sont très élevées de l'ordre de 350 bars dans l'empreinte du moule. Il y a donc un risque très important de rupture de l'insert en verre pendant l'injection de la matière thermoplastique dès que la vitre dépasse une certaine taille. Ce procédé est réservé aux vitres de petites tailles telles que les custodes.

On connaît également un procédé de surmoulage du vitrage par un élastomère de polyuréthane selon le procédé connu sous le nom de RIM (Reaction Injection Moulding).

Ce procédé permet le surmoulage de grands vitrages tels que les pare-brise ou les lunettes arrières mais a cependant l'inconvénient de produire certains défauts à l'intérieur du joint, tels que des bulles d'air dues à l'éventation du moule et des bavures qu'il faut ensuite éliminer en reprise manuelle.

De plus, il est nécessaire d'asperger périodiquement l'empreinte du moule avec de l'agent de démoulage. Pour obtenir une tenue suffisante aux rayons ultraviolets de la lumière solaire, il est nécessaire d'employer un matériau polyuréthane de coût élevé ou bien de revêtir le joint par une peinture protectrice qui peut être soit déposée en fond de moule avant l'injection soit effectuée en reprise, sur le vitrage surmoulé.

Toutes les opérations annexes accroissent le prix de revient du vitrage.

Ce procédé ne se prête pas non plus à la fabrication en carrousel, dans la mesure où le dispositif d'injection est fixé au demi-moule inférieur.

Un procédé de fabrication de vitrage à joint surmoulé utilisant la technique RIM est connu par le DE-A-34 35 365.

Dans le FR-A-2.251.421, on décrit un procédé et une installation de réalisation en continu de joints de vitrage plats de grande longueur destinés au secteur du bâtiment. Le moule est constitué par une gouttière rectiligne mobile et le durcissement du joint, après coulée dans le moule ouvert, est réalisé d'abord sous l'effet d'un rayonnement hautes fréquences ou de micro-ondes et ensuite sous l'effet de rayonnements infra-rouges. Une telle technique n'es pas applicable à la réalisation de joints pour des vitrages courbes pour la construction automobile.

Dans le DE-A-35 26 171, on a décrit un procédé de fabrication de baguettes décoratives pour automobiles dans lequel un insert métallique est placé dans un moule ouvert avant la coulée d'une matière plastique qui est durcie, après fermeture du moule, par des rayonnements hautes fréquences ou des micro-ondes. Une telle technique n'est pas appropriée pour la fabrication de vitrages pour véhicules automobiles à joints surmoulés.

Le but de l'invention est donc de proposer un procédé de réalisation d'un joint en une matière plastique durcissable solidaire d'une partie au moins de la périphérie d'un vitrage, par moulage de la matière plastique à l'état fluide autour du vitrage pour constituer le joint et durcissement du joint moulé sur le vitrage, ce procédé permettant la fabrication de vitrages de grandes dimensions, en utilisant un procédé de moulage à pression et température modérées, applicable à un grand nombre de matières plastiques et avec un coût de production réduit.

Dans ce but, dans une première étape, on injecte d'une manière contrôlée une matière plastique à une température où elle est à l'état liquide et présente une faible viscosité tout en restant inerte, puis, dans une seconde étape, on active la matière plastique injectée par un rayonnement électromagnétique dont la fréquence appartient à l'un des domaines suivants : hautes fréquences, très hautes fréquences, ultra-hautes fréquences et sous l'effet duquel la matière plastique est durcie et échauffée à l'intérieur du moule et, enfin, on refroidit la matière plastique avant le démoulage du joint.

L'invention est également relative à un dispositif pour la mise en oeuvre du procédé de réalisation du joint et au vitrage surmoulé obtenu.

Afin de bien faire comprendre l'invention, on va maintenant décrire, à titre d'exemple non limitatif, en se reportant à la figure jointe en annexe, un mode de réalisation d'un dispositif permettant la mise en oeuvre d'un procédé de moulage et de durcissement suivant l'invention, un exemple de mise en oeuvre de ce procédé et le vitrage obtenu.

La figure unique est une vue en coupe et en élévation d'un dispositif de moulage et de durcissement permettant de mettre en oeuvre le procédé suivant l'invention, pour la fabrication d'un vitrage pour véhicule automobile.

Sur la figure, le dispositif à été représenté pendant la phase de durcissement du joint après moulage en contact avec le bord du vitrage.

Le dispositif désigné de manière générale par le repère 1 comporte un moule 2 constitué d'une matrice et d'un poinçon, respectivement 2a, 2b, comportant des faces en regard dans lesquelles sont ménagées des empreintes complémentaires.

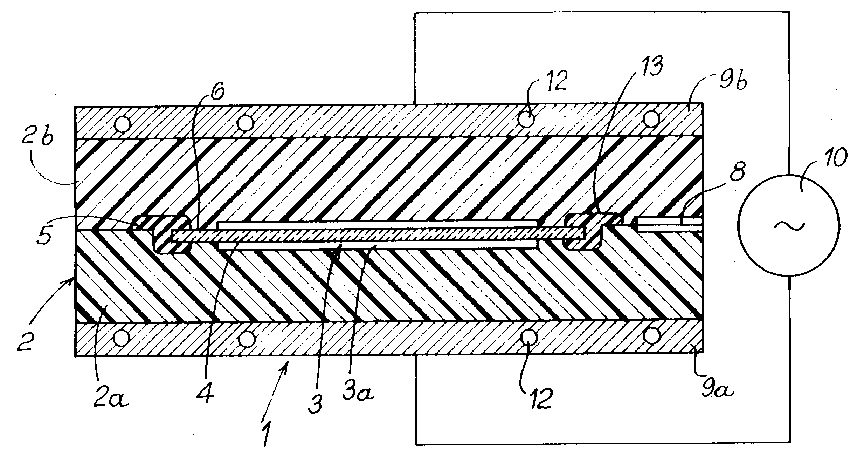

Lorsque le moule est fermé, comme représenté sur le figure 1, les deux faces en regard des parties de moules 2a, 2b sont en contact et ménagent entre elles un espace 3 constitué par la juxtaposition de leurs empreintes.

L'espace 3 comporte une partie centrale 3a dont l'épaisseur est supérieure à l'épaisseur du vitrage 4 constutuant l'insert de verre sur lequel on réalise le surmoulage du joint ainsi qu'une partie périphérique 5 dans laquelle on réalise le moulage du joint. Entre la partie centrale 3 et la partie périphérique 5, les deux parties 2a, 2b du moule comportent des zones en saillie 6 en coïncidence venant en contact avec l'insert de verre 4 lorsque le moule est fermé. On isole ainsi de façon étanche la zone périphérique 5 de moulage du joint, de la zone centrale de l'insert.

La cavité de moulage 5 du joint est délimitée par les parties périphériques des empreintes des parties de moule 2a, 2b et par la partie périphérique de l'insert 4.

Les parties 2a, 2b du moule sont en une matière souple telle que le polypropylène ou l'élastomère de silicone. On obtient, au moment de la fermeture du moule, une fermeture étanche de la cavité de moulage 5 du joint, grâce au contact des deux faces en regard des parties 2a, 2b et des parties en saillie 6 de ces plaques avec les faces de l'insert 4.

Les parties 2a, 2b du moule délimitent entre elles une buse 8 permettant l'injection de matière plastique fluide dans l'empreinte 5 du moule.

Les faces extérieures des parties du moule 2a, 2b sont en contact avec des plaques d'aluminium 9a, 9b au travers desquelles sont transmises les ondes électromagnétiques à haute fréquence provenant d'un générateur 10, pendant la phase de durcissement de la matière plastique injectée dans la cavité 5.

Les plaques d'aluminium 9a, 9b sont fixées sur les parties du moule 2a, 2b correspondantes et sont reliées à un dispositif d'ouverture et de fermeture du moule non représenté.

Des canaux 12 de circulation d'un liquide de refroidissement sont usinés à l'intérieur des plaques d'aluminium 9a, 9b. Ces canaux 12 assurent le refroidissement des plaques 9a, 9b et du moule 2, en particulier pendant la phase de durcissement.

Le dispositif 1 représenté sur la figure peut être associé à toute installation de manutention et de moulage automatique comportant en particulier un bras manipulateur pour assurer le chargement de la vitre 4 constituant l'insert sur lequel on réalise le surmoulage.

Le matériau du moule 2 sera choisi dans tous les cas de façon que l'échauffement de ce moule par perte diélectrique des ondes électromagnétiques soit le plus faible possible. Le moule sera donc réalisé en un matériau pratiquement transparent aux ondes électromagnétiques qui peuvent être des ondes à haute fréquence (HF), à très haute fréquence (VHF) ou à ultra-haute fréquence (UHF ou micro-ondes).

De tels matériaux pourront être constitués, suivant les cas, par du polypropylène sous forme d'homopolymères, de copolymères d'éthylène et de propylène ou d'EPDM vulcanisé. Ce matériau pourrait être constitué également par un élastomère de silicone vulcanisé à froid ou à chaud ou encore par un polymère fluoré tel que le polytétrafluoroéthylène.

Le moule peut également être réalisé en un matériau beaucoup plus rigide comme un béton de résine de formulation telle que son échauffement par perte diélectrique soit faible.

On choisira dans tous les cas le matériau ayant le plus faible coefficient de perte diélectrique au rayonnement électromagnétique utilisé.

Ces matériaux sont généralement des matériaux souples et facilement usinables qui permettent d'obtenir des surfaces de fermeture étanche de l'empreinte du moule, après sa fermeture.

Le générateur 10 permet la production et l'émission d'ondes électromagnétiques dans un domaine qui correspond aux hautes ou très hautes fréquences (fréquences comprises entre 3 et 3000 MHZ), et on accordera de préférence le générateur sur l'une des fréquences autorisées 13,56 MHZ, 27,12 MHZ ou 40,68 MHZ.

Le choix du rayonnement sera effectué en fonction de la nature de la matière plastique liquide dont on assure le durcissement dans le moule, par gélification, polymérisation ou vulcanisation. Ces matériaux, contrairement aux matériaux du moule, sont activables par le rayonnement, car ils présentent un coefficient de perte diélectrique (facteur de perte) important à la température de travail et à la fréquence du rayonnement choisi.

On va maintenant décrire une opération de réalisation d'un joint à la périphérie d'un vitrage, en utilisant le dispositif représenté sur la figure.

On vient placer une vitre plate 4 sur la partie inférieure du moule 2a, cette vitre qui peut être en verre minéral trempé ou feuilleté ou en verre organique à faible coefficient de perte diélectrique ayant des dimensions et une forme correspondant à la partie en verre d'un vitrage pour véhicule automobile de grandes dimensions.

Les parties 2a, 2b du moule 2 sont réalisées en élastomère de silicone vulcanisable à froid.

On a utilisé un élastomère constitué à partir des matières suivantes :

```
RTV 3110 (Dow Corning)         70 parties
RTV 3112 (Dow Corning)    .    30 parties
Catalyseur S (Dow Corning)      7 parties.
```

Lorsque le moule est refermé, on injecte dans l'empreinte 5, par l'intermédiaire de la buse 8, une matière plastique sous forme fluide. Cette matière plastique est un plastisol PVC dont la composition est donnée ci-dessous :

```
PVC LUCOVYL PB 1302 (ATOCHEM)       100 parties
ou SOLVIC 334 (SOLVAY)
PLASTIFIANT PHTALATE LINEAIRE        50 parties
C 9 - C 11
STABILISANT Sel organique de          2 parties
Baryum et de zinc
Epoxy stéarate d'octyle               5 parties.
```

Cette matière se présente sous forme fluide à la température ambiante, c'est-à-dire à une température proche de 20 à 25°.

De plus, sa viscosité est faible, si bien qu'on peut effectuer l'injection par la buse 8 à température ambiante et à basse pression (quelques bars). Une légère surpression est simplement nécessaire pour assurer un remplissage satisfaisant de l'empreinte 5 du moule.

Après injection, le chlorure de polyvinyle plastifié contenu dans l'empreinte 5 à l'état liquide est en contact avec la partie périphérique de la vitre 4 constituant un insert de verre sur lequel on réalise le surmoulage.

On notera qu'avant d'introduire la vitre 4 dans le moule, on enduit son bord externe devant venir en contact avec la matière plastique, avec un agent d'adhérence ou agent de couplage qui permet d'améliorer l'adhérence entre le joint et le bord de la vitre.

Après remplissage de la cavité ou empreinte 5 par la matière plastique liquide, on met le générateur 10 en fonctionnement et on réalise son couplage avec les plaques d'aluminium 9a, 9b. Du fluide de refroidissement est mis en circulation dans les canaux 12 de ces plaques en aluminium pour maintenir leur température au voisinage de 40 à 60 °C.

Pendant l'opération de durcissement de la matière plastique liquide sous l'effet des ondes électromagnétiques, cette matière plastique s'échauffe et communique une partie de sa chaleur au moule 2 dont les plaques 9a et 9b assurent le refroidissement et le maintien en température.

La fréquence du générateur 10 sera choisie non seulement en fonction de la nature de la matière plastique constituant le joint mais encore de la composition du verre de la vitre 4, suivant que ce verre est minéral ou organique.

On pourra adapter le traitement aux matériaux en présence, aussi bien en réglant la fréquence que la puissance du générateur haute fréquence. On peut également jouer sur la durée du durcissement.

Dans le cas d'une vitre en verre minéral trempé ou feuilleté surmoulée en utilisant la composition de PVC plastifié donnée plus haut, on a pu réaliser un durcissement satisfaisant par activation à haute fréquence à 27,12 MHZ pendant 60 secondes. La matière plastique s'est échauffée par pertes diélectriques, sous l'effet des ondes électromagnétiques et on assure un refroidissement du joint 13 réalisé par moulage et durcissement sous l'effet du rayonnement, pendant une durée de 120 secondes, à l'intérieur du moule, le liquide de refroidissement étant maintenu en circulation dans les canaux 12 des plaques 9a, 9b.

A l'issue de ce refroidissement, on ouvre le moule et le vitrage surmoulé obtenu constitué par la vitre 4 et le joint 13 solidaire de sa partie périphérique est prélevé de la partie inférieure du moule 2a, par exemple par un bras de manutention automatique.

Dans le cas d'un mélange à base de PVC plastifié sous forme de plastisol comme décrit plus haut, le durcissement du matériau à l'intérieur du moule, sous l'effet du rayonnement, a lieu par phénomène de gélification.

On peut utiliser d'autres matières plastiques pour constituer le joint du vitrage, ces matières plastiques étant introduites à l'état fluide dans la cavité du moule, puis durcies par activation sous l'effet du rayonnement électromagnétique.

Dans le cas où ces matières plastiques sont constituées par des élastomères de polyuréthane monocomposants ou bicomposants, le durcissement se produit par polymérisation.

Dans le caoutchouc, le durcissement sous activation se produit par vulcanisation.

Dans tous les cas, le durcissement se produit grâce à un échauffement contrôle du joint et de la zone périphérique de l'insert de verre.

On voit que le procédé suivant l'invention présente l'avantage de réaliser un durcissement rapide et sans échauffement excessif, par activation par un rayonnement haute fréquence.

D'autre part, ce procédé peut être appliqué en utilisant une large gamme de matières plastiques. On choisira de préférence des matériaux fluides et à basse viscosité au voisinage de la température ambiante. De tels liquides sont inertes pendant l'injection et leur viscosité reste faible. L'ensemble du moulage peut être effectué à basse pression (quelques bars) et les forces de fermeture du moule sont elles-mêmes faibles.

On pourra donc réaliser le surmoulage de vitrages de grandes dimensions sans risque d'éclatement et avec un appareillage d'un coût réduit.

D'autre part, l'inertie de la matière plastique liquide en l'absence de rayonnement électromagnétique permet un contrôle parfait du remplissage, ce qui évite les bulles d'air, les lignes de démixtion de pigments et les bavures de surpression.

Le moule étant réalisé en un matériau généralement souple, l'étanchéité des plans de joint sera très bonne, aussi bien en ce qui concerne les plans de joint constitués par les surfaces du moule en contact entre elles qu'en ce qui concerne les surfaces du moule en contact avec la vitre. Cette bonne étanchéité permet de diminuer fortement ou même du supprimer la présence de bavures et donc la nécessité d'une opération d'ébavurage en reprise.

Le durcissement par gélification, polymérisation ou vulcanisation sous rayonnement électromagnétique est effectué au moment voulu pendant le cycle de fabrication et en quelques dizaines de secondes.

L'invention ne se limite pas au mode de réalisation qui ont été décrits.

On peut envisager l'utilisation de matières plastiques différentes de celles qui ont été décrites pour réaliser le joint surmoulé autour du vitrage.

On peut également utiliser d'autres matériaux que ceux qui ont été décrits pour constituer le moule. Le verre de la vitre peut être constitué par tout verre minéral ou organique utilisé habituellement pour la constitution des vitres telles que les vitres de véhicule automobile.

En fonction des matières plastiques et du verre en présence, on pourra utiliser toute fréquence appropriée choisie dans les domaines indiqués.

On pourra réaliser un joint sur tout ou partie du pourtour de la vitre en prévoyant un moule ayant une cavité adaptée.

On favorisera généralement l'adhérence du joint en déposant un agent de couplage sur le bord de la vitre venant en contact avec la matière plastique du joint. Dans le cas d'un vitrage comportant un joint sur une partie seulement de sa périphérie, on ne déposera pas d'agent d'adhérence. Il en est ainsi par exemple des vitrages mobiles pour véhicules automobiles.

L'agent d'adhérence pourra être appliqué au pinceau ou au tampon sur le rebord de la vitre de façon manuelle ou par un robot.

Pour la fabrication en série de vitrages surmoulés, on peut réaliser un carrousel comportant plusieurs moules ou dispositifs de moulage et un générateur d'ondes électromagnétiques.

Enfin, le procédé suivant l'invention peut s'appliquer à la fabrication de vitrage pour des véhicules différents de véhicules automobiles ou encore de vitrages pour constructions fixes.

Le mode de réalisation qui a été décrit illustre l'activation du matériau constituant le joint par hautes fréquences mais une installation de moule analogue permettrait la mise en oeuvre du procédé par utilisation d'ultra hautes fréquences ou hyperfréquences (fréquences comprises entre 300 et 3000 MHZ) c'est-à-dire un domaine correspondant aux micro-ondes. On utiliserait de préférence l'une des fréquences autorisées, soit 433 MHZ, 850 MHZ, 915 MHZ ou 2450 MHZ. Ainsi, on pourrait par exemple gélifier du plastisol par activation à une fréquence de 2450 MHZ pendant 1 à 5 minutes, la durée d'activation dépendant bien sûr du mode de génération des micro-ondes, de l'épaisseur de la pièce ainsi que de la formulation, la présence de noir de carbone ou de traces d'eau accélérant notablement le processus de gélification.

## Revendications

1. Procédé de réalisation d'un joint en une matière plastique durcissable solidaire d'une partie au moins de la périphérie d'un vitrage, notamment automobile, par injection de la matière plastique à l'état fluide dans un moule fermé dans lequel est placé le vitrage, caractérisé par le fait que, dans une première étape, on injecte d'une manière contrôlée une matière plastique à une température où elle est à l'état liquide et présente une faible viscosité tout en restant inerte, puis, dans une seconde étape, on active la matière plastique injectée par un rayonnement électromagnétique dont la fréquence appartient à l'un des domaines suivants : hautes fréquences, très hautes fréquences, ultra-hautes fréquences et sous l'effet duquel la matière plastique est durcie et échauffée à l'intérieur du moule et, enfin, on refroidit la matière plastique avant le démoulage du joint.

2. Procédé suivant la revendication 1, caractérisé par le fait que le rayonnement électromagnétique présente une fréquence comprise dans le domaine des hautes et très hautes fréquences, c'est-à-dire comprise entre 3 et 300 MHZ.

3. Procédé suivant la revendication 1, caractérisé par le fait que le rayonnement électromagnétique présente une fréquence comprise dans le domaine des ultra-hautes fréquences, c'est-à-dire comprise entre 300 et 3000 MHZ.

4. Procédé suivant l'une quelconque des revendications 1 à 3, caractérisé par le fait :
– qu'on place une vitre (4) à l'intérieur d'un moule, de façon qu'au moins une partie de son bord périphénique débonde dans une cavité (5) ménagée à l'intérieur de moule,
– qu'on ferme le moule,
– qu'on injecte de manière contrôlée dans la cavité (5) du moule une matière plastique inerte à l'état fluide,
– qu'on soumet la matière plastique fluide remplissant la cavité (5) à un rayonnement électromagnétique,
– qu'on refroidit la matière plastique durcie dans la cavité (5) sous l'effet du rayonnement, et
– qu'on ouvre le moule pour extraire le vitrage surmoulé obtenu.

5. Procédé suivant l'une quelconque des revendications 1 à 4, caractérisé par le fait que la matière plastique du joint (13) est constituée par un mélange de chlorure de polyvinyle plastifié ou plastisol, que cette matière plastique est injectée à l'état liquide à la température ambiante et sous basse pression, qu'elle est soumise, après moulage, à un rayonnement électromagnétique pendant une durée voisine de 60 secondes et qu'elle est ensuite refroidie.

6. Procédé suivant la revendication 5, caractérisé par le fait que le rayonnement électromagnétique a une fréquence de 27,12 MHZ.

7. Procédé suivant la revendication 5, caractérisé par le fait que le rayonnement est constitué par des micro-ondes d'une fréquence voisine de 2450 MHZ.

8. Procédé suivant la revendication 1, caractérisé par le fait que le durcissement se produit pan l'un des phénomènes suivants : gélification, polymérisation, vulcanisation.

9. Dispositif pour la réalisation d'un joint en matière plastique durcissable solidaire d'une partie au moins de la périphérie d'un vitrage (4), notamment automobile, par injection de la manière plastique à l'état fluide dans un moule fermé dans lequel est placé le vitrage, caractérisé par le fait qu'il comporte un moule (2) en deux parties (2a, 2b) en un matériau plastique souple ménageant entre elles, dans leur position de fermeture, un espace libre (3) comportant une partie centrale (3a) pour recevoir la vitre (4) et une partie périphérique (5) constituant une cavité de moulage du joint (13), deux plaques métalliques (9a, 9b) solidaires des faces externes des parties respectives (2a, 2b) du moule, et un générateur (10) de haute fréquence couplé aux plaques métalliques (9a, 9b).

10. Dispositif suivant la revendication 9, caractérisé par le fait que les plaques (9a, 9b) sont en aluminium et comportent des canaux (12) pour la circulation d'un fluide de refroidissement.

11. Dispositif suivant l'une quelconque des revendications 9 et 10, caractérisé par le fait que les deux parties du moule (2a, 2b) sont en un matériau plastique à faible coefficient de perte diélectrique appartenant au groupe :
polypropylène sous forme d'homopolymère,
copolymère d'éthylène et de propylène,
éthylène propylène diène monomère vulcanisé,
élastomère de silicone vulcanisé,
polymère fluoré tel que le polytétrafuoréthylène,
béton de résine époxyde.

12. Vitrage, en particulier pour véhicules automobiles, comportant une vitre en verre transparent (4) et un joint en matière plastique solidaire d'une partie au moins de la périphérie de la vitre (4), caractérisé par le fait que le joint (13) est réalisé par injection de manière contrôlée d'une matière plastique inerte à l'état fluide dans un moule fermé dans lequel est placé la vitre (4) puis durcissement pan un rayonnement électromagnétique dont la fréquence appartient à l'un des domaines suivants: haute fréquence, très haute fréquence, ultra-haute fréquence.

13. Vitrage suivant la revendication 12, caractérisé par le fait que le joint (13) est constitué par un mélange de chlorure de polyvinyle plastifié injecté sous forme de plastisol.

14. Vitrage suivant la revendication 13, caractérisé par le fait que le joint est constitué par un élastomère de polyuréthane.

15. Vitrage suivant la revendication 13, caractérisé par le fait que le joint (13) est constitué par un caoutchouc.

16. Vitrage suivant l'une quelconque des revendications 12 à 15, caractérisé par le fait que la vitre (4) est constituée par un verre minéral trempé ou feuilleté.

17. Vitrage suivant l'une quelconque des revendications 12 à 15, caractérisé par le fait que la vitre (4) est constituée par un verre organique à faible coefficient de perte diélectrique dans la gamme des hautes ou très hautes fréquences et des hyperfréquences.


**Patentansprüche**

1. Verfahren zur Ausbildung einer Verbindung aus einem härtbaren formschlüssigen Kunststoffmaterial an mindestens einem Teil des Umfangs einer Verglasung, insbesondere für Automobile, durch Einspritzen des Kunststoffmaterials in fluidem Zustand in eine geschlossene Form, in welche die Verglasung eingebracht ist, **dadurch gekennzeichnet**, daß man in einer ersten Stufe ein Kunststoffmaterial mit einer Temperatur, bei der es in flüssiger Form und mit geringer Viskosität vorliegt, jedoch inert bleibt, in gesteuerter Weise einspritzt, dann in einer zweiten Stufe das eingespritzte Kunststoffmaterial mit einer elektromagnetischen Strahlung, deren Frequenz einem der folgenden Bereiche angehört: hohe Frequenzen, sehr hohe Frequenzen, ultrahohe Frequenzen und unter deren Einwirkung das Kunststoffmaterial im Inneren der Form gehärtet und aufgeheizt wird, aktiviert und schließlich das Kunststoffmaterial vor der Entnahme aus der Form abkühlt.

2. Verfahren nach Anspruch 1, **dadurch gekennzeichnet**, daß die elektromagnetische Strahlung eine Frequenz im Bereich der hohen und sehr hohen Frequenzen aufweist, d. h. zwischen 3 und 300 MHz.

3. Verfahren nach Anspruch 1, **dadurch gekennzeichnet**, daß die elektromagnetische Strahlung eine Frequenz im Bereich der ultrahohen Frequenzen aufweist, d. h. zwischen 300 und 3000 MHz.

4. Verfahren nach einem der Ansprüche 1 bis 3, **dadurch gekennzeichnet,** daß man

– eine Fensterscheibe (4) in das Innere einer Form derart einbringt, daß mindestens ein Teil seines Umfangsrandes in einen Hohlraum (5) hineinragt, der im Inneren der Form vorgesehen ist,

– man die Form schließt,

– man ein inertes Kunststoffmaterial in fluidem Zustand in gesteuerter Weise in den Hohlraum (5) der Form einspritzt,

– das fluide Kunststoffmaterial, welches den Hohlraum (5) ausfüllt, mit elektromagnetischer Strahlung bestrahlt,

– das in dem Hohlraum (5) unter Einwirkung der Strahlung gehärtete Kunststoffmaterial abkühlt und

– die Form öffnet, um die erhaltene umformte Verglasung zu entnehmen.

5. Verfahren nach einem der Ansprüche 1 bis 4, **dadurch gekennzeichnet**, daß das Kunststoffmaterial der Verbindung (13) aus einer Mischung von weichgemachtem Polyvinylchlorid oder einem Polyvinylchlorid-Plastisol besteht, dieses Kunststoffmaterial in flüssigem Zustand bei Raumtemperatur und unter geringem Druck eingespritzt wird, daß es nach dem Einbringen in der Form während einer Zeitdauer von etwa 60 Sekunden mit einer elektromagnetischen Strahlung bestrahlt wird und anschließend abgekühlt wird.

6. Verfahren nach Anspruch 5, **dadurch gekennzeichnet**, daß die elektromagnetische Strahlung eine Frequenz von 27, 12 MHz besitzt.

7. Verfahren nach Anspruch 5, **dadurch gekennzeichnet**, daß die Strahlung Mikrowellen mit einer Frequenz von etwa 2450 MHz umfaßt.

8. Verfahren nach Anspruch 1, **dadurch gekennzeichnet**, daß die Härtung des Produkts durch eines der folgenden Phänomene erfolgt: Gelbildung, Polymerisation, Vulkanisation.

9. Vorrichtung zur Ausbildung einer Verbindung aus einem härtbaren formschlüssigen Kunststoffmaterial an mindestens einem Teil des Umfangs einer Verglasung (4), insbesondere für Automobile, durch Einspritzen des Kunststoffmaterials in fluidem Zustand in eine geschlossene Form, in welche die Verglasung eingebracht worden ist, **gekennzeichnet durch** eine Form (2) mit zwei Teilen (2a, 2b) aus einem weichen Kunststoffmaterial, die zwischen sich in geschlossenem Zustand einen Freiraum (3) ergeben, der einen Mittelbereich (3a) zur Aufnahme der Scheibe (4) und einen Umfangsbereich (5) aufweist, der einen Formhohlraum für die Verbindung (13) bildet, zwei formschlüssige Metallplatten (9a, 9b) auf den äußeren Oberflächen der entsprechenden Teile (2a, 2b) der Form und einen mit den Metallplatten (9a, 9b) verbundenen Hochfrequenzgenerator (10).

10. Vorrichtung nach Anspruch 9, dadurch gekennzeichnet, daß die Platten (9a, 9b) aus Aluminium bestehen und Kanäle (12) zur Zirkulation eines Kühlfluids aufweisen.

11. Vorrichtung nach einem der Ansprüche 9 und 10, **dadurch gekennzeichnet**, daß die beiden Teile (2a, 2b) der Form aus einem Kunststoffmaterial mit niedrigem dielektrischem Verlustkoeffizient gebildet sind, die der folgenden Gruppe angehören:

Polypropylen in Form des Homopolymers,

Copolymere aus Ethylen und Propylen,

vulkanisiertes Ethylen-Propylen-Dienmonomer,

vulkanisiertes Silicon-Elastomer,

fluoriertes Polymer, wie Polytetrafluorethylen,

Epoxidharz-Beton.

12. Verglasung, insbesondere für Kraftfahrzeuge, mit einer transparenten Glasscheibe (4) und einer formschlüssigen Verbindung aus einem Kunststoffmaterial an mindestens einem Teil des Umfangs der Scheibe (4), **dadurch gekennzeichnet**, daß die Verbindung (13) durch ein kontrolliertes Einspritzen eines inerten Kunststoffmaterials in fluidem Zustand in eine geschlossene Form, in welche die Scheibe (4) eingebracht worden ist, und Aushärten mit einer elektromagnetischen Strahlung, deren Frequenz einem der folgenden Bereiche angehört: hohe Frequenzen, sehr hohe Frequenzen, ultra-hohe Frequenzen, gebildet worden ist.

13. Verglasung nach Anspruch 12, **dadurch gekennzeichnet**, daß die Verbindung (13) aus einer Mischung von weichgemachtem Polyvinylchlorid ausgebildet ist, welches in Form eines Plastisols eingespritzt worden ist.

14. Verglasung nach Anspruch 13, **dadurch gekennzeichnet**, daß die Verbindung aus einem Polyurethan-Elastomeren gebildet ist.

15. Verglasung nach Anspruch 13, **dadurch gekennzeichnet**, daß die Verbindung (13) aus einem Kautschuk gebildet ist.

16. Verglasung nach einem der Ansprüche 12 bis 15, **dadurch gekennzeichnet**, daß die Scheibe (4) aus einem Einscheiben-Sicherheitsglas oder einem Verbund-Sicherheitsglas besteht.

17. Verglasung nach einem der Ansprüche 12 bis 15, **dadurch gekennzeichnet,** daß die Scheibe (4) aus einem organischen Glas mit niedrigem dielektrischem Verlustkoeffizienten bei hohen oder sehr hohen Frequenzen und Hyperfrequenzen besteht.

## Claims

1. Method of producing a seal made of a curable plastics material, integral with at least part of the periphery of a glazing panel, in particular automobile glazing panel, by injection of the plastics material in the fluid state into a closed mould in which there is placed the glazing panel, characterized in that, in a first step, a plastics material is injected in a controlled manner at a temperature at which it is in the liquid state and has a low viscosity while remaining inert, then, in a second step, the injected plastics material is activated by electromagnetic radiation whereof the frequency falls into one of the following ranges: high frequencies and very high frequencies, ultra-high frequencies; and under the action of which the plastics material is cured and heated inside the mould, and finally, the plastics material is cooled before removing the seal from the mould.

2. Method according to Claim 1, characterized in that the electromagnetic radiation has a frequency in the range of high and very high frequencies, that is to say between 3 and 300 MHz.

3. Method according to Claim 1, characterized in that the electromagnetic radiation has a frequency in the range of ultra-high frequencies, that is to say between 300 and 3000 MHz.

4. Method according to any of Claims 1 to 3, characterized in that:
– a pane (4) is placed inside a mould, so that at least one part of its peripheral edge protrudes into a cavity (5) made inside the mould,
– the mould is closed,
– an inert plastics material in the fluid state is injected in a controlled manner into the cavity (5) of the mould,
– the fluid plastics material filling the cavity (5) is subjected to electromagnetic radiation,
– the cured plastics material is cooled in the cavity (5) under the action of the radiation, and
– the mould is opened to extract the obtained glazing panel onto which the plastics material has been moulded.

5. Method according to any of Claims 1 to 4, characterized in that the plastics material of the seal (13) is formed from a mixture of plasticized polyvinyl chloride or plastisol, in that the plastics material is injected in the liquid state at room temperature and under low pressure, and in that it is subjected, after moulding, to electromagnetic radiation for a time in the region of 60 seconds and in that it is then cooled.

6. Method according to Claim 5, characterized in that the electromagnetic radiation has a frequency of 27.12 MHz.

7. Method according to Claim 5, characterized in that the radiation is formed from microwaves with a frequency in the region of 2450 MHz.

8. Method according to Claim 1, characterized in that the curing occurs by one of the following phenomena: gelling, polymerization, vulcanization.

9. Apparatus for the production of a seal made of curable plastics material, integral with at least part of the periphery of a glazing panel (4), in particular automobile panel, by injection of the plastics material in the fluid state into closed mould in which there is placed the glazing panel, characterized in that it has a mould (2) made of two parts (2a, 2b) of flexible plastics material forming between them, in their closed position, a free space (3) having a central part (3a) for receiving the pane (4) and a peripheral part (5) forming a moulding cavity for the seal (13), two metal plates (9a, 9b) integral with the external faces of the respective parts (2a, 2b) of the mould, and a high-frequency generator (10) coupled to the metal plates (9a, 9b).

10. Apparatus according to Claim 9, characterized in that the plates (9a, 9b) are of aluminium and have channels (12) for the circulation of a cooling fluid.

11. Apparatus according to either of Claims 9 and 10, characterized in that the two parts (2a, 2b) of the mould are of a plastics material with low dielectric loss coefficient, belonging to the group comprising:
polypropylene in the form of a homopolymer,
ethylene and propylene copolymer,
vulcanized ethylenepropylenediene monomer,
vulcanized silicone elastomer,
fluorinated polymer such as polytetrafluoroethylene,
epoxy resin concrete.

12. Glazing panel, in particular for automobile vehicles, having a transparent glass pane (4) and a plastics material seal integral with at least part of the periphery of the pane (4), characterized in that the seal (13) is produced by injection in a controlled manner of an inert plastics material in the fluid state into a closed mould in which there is placed the pane (4) then by curing by electromagnetic radiation whereof the frequency falls into one of the following ranges: high frequency, very high frequency, ultra-high frequency.

13. Glazing panel according to Claim 12, characterized in that the seal (13) is formed from a mixture of plasticized polyvinyl chloride injected in the form of plastisol.

14. Glazing panel according to Claim 13, characterized in that the seal is formed from a polyurethane elastomer.

15. Glazing panel according to Claim 13, characterized in that the seal (13) is formed from a rubber.

16. Glazing panel according to any of Claims 12 to 15, characterized in that the pane (4) is formed from a tempered mineral glass or compound glass.

17. Glazing panel according to any of Claims 12 to 15, characterized in that the pane (4) is formed from an organic glass with low dielectric loss coefficient in the range of high or very high frequencies and hyperfrequencies.